(19) Europäisches Patentamt
European Patent Office
Office européen des brevets

(11) EP 4 299 553 A1

(12) EUROPEAN PATENT APPLICATION

(43) Date of publication:
03.01.2024 Bulletin 2024/01

(21) Application number: 22182215.8

(22) Date of filing: 30.06.2022

(51) International Patent Classification (IPC):
C05C 3/00 (2006.01)        C05D 1/02 (2006.01)
C05D 3/02 (2006.01)        C05G 1/00 (2006.01)
C01C 1/24 (2006.01)        C01C 1/28 (2006.01)
C01D 5/00 (2006.01)        C01B 17/74 (2006.01)

(52) Cooperative Patent Classification (CPC):
(C-Sets available)
C05D 3/02; C01B 17/745; C01C 1/24; C01C 1/26;
C01C 1/28; C01D 5/00; C05C 3/00; C05D 1/02;
C05G 1/00                                    (Cont.)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: SABIC Global Technologies B.V.
4612 PX Bergen op Zoom (NL)

(72) Inventors:
• MAMEDOV, Aghaddin
  Sugar Land, TX 77478 (US)
• AL-RABHI, Mohamed
  Sugar Land, TX 77478 (US)

(74) Representative: J A Kemp LLP
80 Turnmill Street
London EC1M 5QU (GB)

(54) **PRODUCTION OF NITROGEN, POTASSIUM, SULFUR NUTRIENT THROUGH DE-CARBONIZATION AND UTILIZATION OF CALCIUM SULFATE**

(57) Disclosed are methods and systems for capturing carbon dioxide and utilizing calcium sulfate to generate useful products.

FIG. 1

(52) Cooperative Patent Classification (CPC): (Cont.)

C-Sets
**C05C 3/00, C05D 1/02, C05D 3/02**

**Description**

**I. Field of the Disclosure**

This disclosure generally concerns methods utilizing carbon dioxide and phosphogypsum for generating fertilizers.

**II. Background**

Over the past decade, the world has become more conscious of the adverse effects on the environment posed by disposing processing industries, such as waste gypsums like phosphogypsum (PG) or red gypsum (RG). Waste gypsums have been disposed by stacking on land or discharge to the sea. However, both methods of disposal have possible adverse environmental effects.

Further, reduction of $CO_2$ emission is presently among the top priorities of many industries. Chemical utilization of $CO_2$ through its reduction to CO and involvement of chemical reactions requires excessive consumption of energy. That is one of the reasons why, presently, many chemical companies have made significant efforts to reduce $CO_2$ emission by storing $CO_2$ in underground deep storage.

There is a need for additional ways to reduce $CO_2$ as well as reduce waste gypsums.

**SUMMARY OF THE INVENTION**

A solution to at least some of the problems discussed above, including an efficient utilization of gypsum, such as a waste gypsum, and carbon dioxide, has been discovered. In one aspect, the solution resides in reacting calcium sulfate ($CaSO_4$), carbon dioxide ($CO_2$), a source of ammonia, such as one or both of ammonia ($NH_3$) and ammonium hydroxide ($NH_4OH$), and a source of potassium. The reaction can be performed in one reaction vessel or the reactions that occur can be divided. In some instances, the resulting ammonium sulfate can be reduced. Non-limiting example reactions (1) and (2) are shown below, respectively. This reaction scheme provides the benefit of utilizing both carbon dioxide, including from waste sources, and gypsum, including from waste and recycled sources. This can result in decreasing carbon dioxide release into the atmosphere while producing useful products. The carbon dioxide and gypsum utilization may concern the generation of a fertilizer, such as calcium carbonate ($CaCO_3$) or ammonium sulfate (($NH_4)_2SO_4$), or potassium sulfate ($K_2SO_4$) and/or the generation of an acid, such as sulfuric acid ($H_2SO_4$) that can be used in production of phosphoric acid ($H_2PO_4$). When other sources of potassium or ammonia are used, different or additional products can be produced, such as hydrochloric acid (HCl), carbonic acid ($H_2CO_3$), phosphoric acid ($H_3PO_4$), and/or nitric acid ($HNO_3$), such as when the potassium source is KCl, $K_2CO_3$, $K_3PO_4$, and/or $KNO_3$, respectively.

$$(1) \qquad 2CaSO_4.2H_2O + 2CO_2 + 2NH_3 + 2KOH \rightarrow 2CaCO_3 + (NH_4)_2SO_4 + K_2SO_4 + 2H_2O$$

$$(2) \qquad (NH_4)_2SO_4 \rightarrow 2\ NH_3 + H_2SO_4$$

In some instances, the reaction of calcium sulfate ($CaSO_4$), carbon dioxide ($CO_2$), a source of ammonia, and a source of potassium comprise two, three, or more reactions that occur in the same reaction vessel or separate vessels. As a non-limiting example, the reaction of calcium sulfate ($CaSO_4$), carbon dioxide ($CO_2$), a source of ammonia, and a source of potassium are three reactions, such as the non-limiting example reactions (3), (4), and (5).

$$(3) \qquad CaSO_4.2H_2O + CO_2 + 2NH_3 \rightarrow CaCO_3 + (NH_4)_2SO_4 + H_2O$$

$$(4) \qquad CaSO_4 + 2KOH \rightarrow Ca(OH)_2 + K_2SO_4$$

$$(5) \qquad Ca(OH)_2 + CO_2 \rightarrow CaCO_3 + H_2O$$

Certain aspects concern a final product that contains a mixture comprising, consisting essentially of, or consisting of any of the above chemicals, including $CaCO_3$. Embodiments of the disclosure are improvements to known methods of generating fertilizers, including fertilizer comprising, consisting essentially of, or consisting of $CaCO_3$, including by involving the use of $CO_2$ and/or gypsum, such as phosphogypsum

Certain embodiments provide utilization (such as by recycling) of high amounts of $CO_2$ for synthesis of a complex nutrient, such as $(NH_4)_2SO_4/K_2SO_4$.

Certain aspects are directed to methods of capturing $CO_2$ and using calcium sulfate to prepare sulfuric acid. The method can include steps (a), (b), and/or (c). In step (a), calcium sulfate ($CaSO_4$), carbon dioxide ($CO_2$), a source

of ammonia, and a source of potassium are reacted to generate a first product comprising calcium carbonate ($CaCO_3$), potassium sulfate ($K_2SO_4$), and ammonium sulfate (($NH_4$)$_2SO_4$). In step (b), the ($NH_4$)$_2SO_4$ in the first product is decomposed into $NH_3$ and sulfuric acid ($H_2SO_4$) by contacting the ($NH_4$)$_2SO_4$ with a catalyst, such as an additional acid. In step (c), the $H_2SO_4$ produced in step (b) is contacted with calcium phosphate ($Ca_3(PO_4)_2$) to generate phosphoric acid ($H_3PO_4$) and $CaSO_4$.

In certain aspects, the additional acid in step (b) comprises or consists of $H_2SO_4$. In some aspects, the source of $CaSO_4$ in step (a) comprises waste gypsum and/or recycled gypsum. In certain aspects, the source of $CO_2$ in step (a) comprises waste gas from an industrial plant and/or flue gas. In some aspects, the source of $CaSO_4$ in step (a) comprises phosphogypsum and/or red gypsum. In some aspects, the source of ammonia is a solution of ammonium hydroxide, ammonium, ammonium carbonate, ammonia gas, succinimide, and/or phthalimide. In some aspects, the source of potassium is potassium hydroxide (KOH), potassium chloride (KCl), potassium carbonate ($K_2CO_3$), potassium phosphate ($K_3PO_4$), and/or potassium nitrate ($KNO_3$). In some aspects, step (a) occurs at approximately 50°C to 70°C. Some aspects, $CaCO_3$ is separated from the first product before step (b). In some aspects, the method includes step (d). In step (d), the separated $CaCO_3$ is combined with a plant nutrient to form a fertilizer. In some aspects, the separated $CaCO_3$ is dried. In certain aspects, at least a portion of the $NH_3$ produced in step (b) is used as at least a portion of the $NH_3$ used in step (a). In certain aspects, at least a portion of the $H_2SO_4$ produced in step (b) is used as at least a portion of $H_2SO_4$ used to produce phosphogypsum. In certain aspects, at least a portion of the phosphogypsum produced is used as the source for the $CaSO_4$ of step (a).

Certain aspects are directed to systems for capturing $CO_2$ and using calcium sulfate ($CaSO_4$) to prepare sulfuric acid ($H_2SO_4$). In some aspects, the system comprises or consists of elements (a), (b), and/or (c). Element (a) can comprise a first reactor capable of receiving $CaSO_4$, $CO_2$, an ammonia source, and a potassium source and providing conditions to generate a product comprising $CaCO_3$, $K_2SO_4$, and ($NH_4$)$_2SO_4$. Element (b) can comprise a second reactor capable of decomposing ($NH_4$)$_2SO_4$ generated from reactor (a) into $H_2SO_4$ and $NH_3$. Element (c) can comprise an apparatus capable of separating $CaCO_3$ from the product generated in the first reactor. In some aspects, the system comprises elements (a) and (b) and not (c). In some aspects, the system comprises elements (a), (b), and (c). In some aspects, the first and second reactor are the same reactor. In other aspects, the first and second reactor are different reactors. In some instances, the first reactor is two or three separate reactors. In some embodiments, the system comprises an apparatus connecting the first reactor and the second reactor. In some aspects, the system comprises a third reactor capable of receiving $H_2SO_4$ and calcium phosphate ($Ca_3(PO_4)_2$) and providing conditions to generate $CaSO_4$ and phosphoric acid ($H_3PO_4$). The first, second, and third reactors may be the same reactor or, in some aspects, may be different reactors. In some aspects, the first and third reactors are the same reactor. In some aspects, the second and third reactors are the same reactor. In some aspects, the first reactor is capable of receiving and reacting $CO_2$ from a flue gas and/or a waste gas from an industrial plant. In some aspects, the first reactor is capable of receiving and reacting $CO_2$ from a flue gas and/or a waste gas from an industrial plant, wherein the $CO_2$ from the flue gas and/or waste gas is not purified to separate or concentrate the $CO_2$ in the flue gas and/or waste gas before reacting to form the $CaCO_3$.

Also disclosed are the following Aspects 1 to 34 of the present invention.

Aspect 1 is a method of capturing $CO_2$ and using calcium sulfate ($CaSO_4$) to prepare a nitrogen (N), potassium (K), sulfur (S) fertilizer, the method comprising the steps of: (a) contacting calcium sulfate ($CaSO_4$) with carbon dioxide ($CO_2$), a source of potassium, and one or both of ammonia ($NH_3$) and ammonium hydroxide ($NH_4OH$) to generate a first product comprising calcium carbonate ($CaCO_3$), ammonium sulfate (($NH_4$)$_2SO_4$), and potassium sulfate ($K_2SO_4$).

Aspect 2 is the method of aspect 1, further comprising: (b) decomposing the ($NH_4$)$_2SO_4$ in the first product into $NH_3$ and sulfuric acid ($H_2SO_4$) by contacting the ($NH_4$)$_2SO_4$ with a catalyst.

Aspect 3 is the method of aspect 2, further comprising: (c) contacting the $H_2SO_4$ produced in step (b) with calcium phosphate ($Ca_3(PO_4)_2$) to generate phosphoric acid ($H_3PO_4$) and $CaSO_4$.

Aspect 4 is the method of aspect 1 to 3, wherein the catalyst is an additional acid, preferably $H_2SO_4$.

Aspect 5 is the method of any one of aspects 1 to 4, wherein the source of $CaSO_4$ in step (a) comprises waste gypsum and/or recycled gypsum.

Aspect 6 is the method of any one of aspects 1 to 5, wherein the source of $CO_2$ in step (a) comprises waste gas from an industrial plant and/or flue gas.

Aspect 7 is the method of any one of aspects 1 to 6, wherein the source of $CaSO_4$ in step (a) comprises phosphogypsum and/or red gypsum.

Aspect 8 is the method of any one of aspects 1 to 7, wherein the source of potassium in step (a) comprises potassium hydroxide (KOH), potassium chloride (KCl), potassium carbonate ($K_2CO_3$), potassium phosphate ($K_3PO_4$), and/or potassium nitrate ($KNO_3$).

Aspect 9 is the method of any one of aspects 1 to 8, wherein the first product further comprises water, hydrochloric acid (HCl), carbonic acid ($H_2CO_3$), phosphoric acid ($H_3PO_4$), and/or nitric acid ($HNO_3$).

Aspect 10 is the method of any one of aspects 1 to 9, wherein the step (a) occurs at approximately 50°C to 70°C.

Aspect 11 is the method of any one of aspects 1 to 10, further comprising separating $CaCO_3$ from the first product.

Aspect 12 is the method of aspect 11, further comprising combining the separated $CaCO_3$ with a plant nutrient to form a fertilizer.

Aspect 13 is the method of any one of aspects 11 and 12, further comprising drying the separated $CaCO_3$.

Aspect 14 is the method of any one of aspects 2 to 13, wherein at least a portion of the $NH_3$ produced in step (b) is used as at least a portion of the $NH_3$ used in step (a).

Aspect 15 is the method of any one of aspects 2 to 14, wherein at least a portion of the $H_2SO_4$ produced in step (b) is used as at least a portion of $H_2SO_4$ used to produce phosphogypsum.

Aspect 16 is the method of aspect 15, wherein at least a portion of the phosphogypsum produced is used as the source for the $CaSO_4$ of step (a).

Aspect 17 is a system for capturing $CO_2$ and using calcium sulfate ($CaSO_4$) to prepare a nitrogen (N), potassium (K), sulfur (S) fertilizer, the system comprising: (a) a first reactor capable of receiving $CaSO_4$, $CO_2$, a source of potassium, and a source of ammonia and providing conditions to generate a product comprising calcium carbonate ($CaCO_3$), ammonium sulfate (($NH_4)_2SO_4$), and potassium sulfate ($K_2SO_4$).

Aspect 18 is the system of aspect 17, further comprising: (b) a second reactor capable of decomposing ($NH_4)_2SO_4$ generated from reactor (a) into $H_2SO_4$ and $NH_3$.

Aspect 19 is the system of any one of aspects 17 or 18, further comprising: (c) optionally an apparatus capable of separating $CaCO_3$ from the product generated in the first reactor.

Aspect 20 is the system of any one of aspects 18 and 19, wherein the first reactor and the second reactor are the same reactor.

Aspect 21 is the system of any one of aspects 18 and 19, wherein the first reactor and the second reactor are different reactors.

Aspect 22 is the system of aspect 21, further comprising an apparatus connecting the first reactor and the second reactor.

Aspect 23 is the system of any one of aspects 17 to 22, further comprising a third reactor capable of receiving $H_2SO_4$ and calcium phosphate ($Ca_3(PO_4)_2$) and providing conditions to generate $CaSO_4$ and phosphoric acid ($H_3PO_4$).

Aspect 24 is the system of aspect 23, wherein the third reactor and the second reactor are the same reactor.

Aspect 25 is the system of any one of aspects 23 to 24, wherein the third reactor, the second reactor, and the first reactor are the same reactor.

Aspect 26 is the system of aspect 23, wherein the third reactor, the second reactor, and the first reactor are different reactors.

Aspect 27 is the system of any one of aspects 17 to 26, wherein the first reactor is capable of receiving and reacting $CO_2$ from a flue gas and/or a waste gas from an industrial plant.

Aspect 28 is the system of any one of aspects 17 to 27, wherein the first reactor is capable of receiving and reacting $CO_2$ from a flue gas and/or a waste gas from an industrial plant, wherein the $CO_2$ from the flue gas and/or waste gas is not purified to separate or concentrate the $CO_2$ in the flue gas and/or waste gas before reacting to form the $CaCO_3$.

Aspect 29 is a fertilizer product comprising calcium carbonate ($CaCO_3$), ammonium sulfate (($NH_4)_2SO_4$), and potassium sulfate ($K_2SO_4$) produced by the method of any one of aspects 1 to 16.

Aspect 30 is the fertilizer product of aspect 29, further comprising one or more of water, hydrochloric acid (HCl), carbonic acid ($H_2CO_3$), phosphoric acid ($H_3PO_4$), and/or nitric acid ($HNO_3$).

Aspect 31 is the fertilizer product of any one of aspects 29 and 30, wherein the $CaCO_3$ encapsulates at least a portion of the ($NH_4)_2SO_4$ and $K_2SO_4$.

Aspect 32 is a fertilizer composition comprising calcium carbonate ($CaCO_3$), ammonium sulfate (($NH_4)_2SO_4$), and potassium sulfate ($K_2SO_4$).

Aspect 33 is the fertilizer composition of aspect 32, further comprising one or more of water, hydrochloric acid (HCl), carbonic acid ($H_2CO_3$), phosphoric acid ($H_3PO_4$), and/or nitric acid ($HNO_3$).

Aspect 34 is the fertilizer composition of any one of aspects 32 and 33, wherein the $CaCO_3$ encapsulates at least a portion of the ($NH_4)_2SO_4$ and $K_2SO_4$.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of' any of the ingredients or steps disclosed throughout the specification. Compositions and methods "consisting essentially of' any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

## BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

FIG. 1: a schematic of a system and method for capturing $CO_2$ and using calcium sulfate in combination with the process of phosphoric acid production according to a non-limiting example of a system and method disclosed herein.
FIG. 2: a schematic of a system and method for capturing $CO_2$ and using calcium sulfate according to a non-limiting example of a system and method disclosed herein.

## DETAILED DESCRIPTION OF THE INVENTION

Certain aspects of the present disclosure provide benefits over existing carbon dioxide capture techniques, including by an efficient utilization of gypsum, such as a waste gypsum. In one aspect, the solution resides in reacting calcium sulfate ($CaSO_4$) with carbon dioxide ($CO_2$), a source of ammonia, and a source of potassium. In some instances, the reaction produces ammonium sulfate, potassium sulfate, and/or calcium carbonate. In some instances, a step includes decomposing the resulting ammonium sulfate. This reaction scheme provides the benefit of utilizing both carbon dioxide, including from waste sources, and gypsum, including from waste and recycled sources, such as phosphogypsum. This can result in decreasing carbon dioxide release into the atmosphere. The carbon dioxide and gypsum utilization may concern the generation of a fertilizer such as calcium carbonate ($CaCO_3$) or ammonium sulfate (($NH_4)_2SO_4$), or potassium sulfate ($K_2SO_4$) and/or the generation of an acid, such as sulfuric acid ($H_2SO_4$) that can be used in production of phosphoric acid ($H_2PO_4$). When other sources of potassium or ammonia are used, different or additional products can be produced, such as hydrochloric acid (HCl), carbonic acid ($H_2CO_3$), phosphoric acid ($H_3PO_4$), and/or nitric acid ($HNO_3$). Further, certain aspects do not include production of and/or inclusion of calcium phosphate urea, urea phosphate, and/or urea calcium sulfate.

## I. Fertilizer

Certain embodiments herein concern a fertilizer comprising $CaCO_3$. Certain aspects involve synthesis of the nutrient complex using natural sources of ingredients of the fertilizer, such as $CaSO_4$ and $CO_2$. In addition to these feed sources, a source of ammonia and a source of potassium also are used, in some embodiments.

The fertilizer, which may be a fertilizer granule, can contain calcium (Ca) and carbon (C) present as carbonate. The ratio of elements present in the fertilizer may be tailored to specific applications. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the Ca in the fertilizer can be present as calcium carbonate.

In some aspects, the fertilizer comprises Ca, nitrogen (N), phosphorus (P), potassium (K), sulfur (S), and/or C. i) The Ca content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, ii) the N content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iii) the P content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iv) the K content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, based on the total weight of the fertilizer, v) The S content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, and vi) the C content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, based on the total weight of the fertilizer.

The Ca, N, P, K, S, and/or C can be present as and/or sourced as a water soluble compound(s) or a water insoluble compound(s). In some instances, the Ca, N, P, K, S, and/or C can be present as salts. In some aspects, the Ca, N, P, K, S, and/or C can be present as a water soluble salt(s). The Ca, N, P, K, S, and/or C salt(s) can be in a non-hydrate and/or one or more hydrate form.

Moisture content of the dried fertilizer can be less than 1 wt. %, such as 0.1 wt. % to 0.9 wt. %, or any one of or between any two of 0.1, 0.2, 0.3, 0.4, 0.5, 0.6, 0.7, 0.8, 0.9, or 1 wt. %, or any range thereof, based on the weight of the fertilizer, such as a fertilizer granule. As a non-limiting example, the moisture content can be measured by drying the sample at 50°C, for 25 min and measuring the amount of mass lost by the fertilizer after being dried.

In some particular aspects, the $CaSO_4$ can contain and/or can be obtained from phosphogypsum and/or red gypsum.

The fertilizer can be of any suitable shape. Non-limiting shapes include spherical, cuboidal, cylindrical, puck shape, oval, and oblong shapes. In some aspects, the fertilizer can be of cylindrical shape with a circular, elliptical, ovular, triangular, square, rectangular, pentagonal, or hexagonal cross section, although a cylindrical shaped core having a cross-section of other shapes can also be made. In some aspects, the fertilizer at its widest dimension can be 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer can have a substantially spherical shape with an average diameter 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The fertilizer can be water and/or soil dispersible. In some aspects, a fertilizer, such as a fertilizer granule having a size of 2 mm to 4 mm prior to adding to water, can disintegrate into particles having sizes less than 1 mm, less than 0.9 mm, less than 0.8 mm, less than 0.7 mm, less than 0.6 mm, less than 0.5 mm, less than 0.4 mm, or less than 0.3 mm, within 1 minute of adding the fertilizer to water at a pH 7, under stirring at a rate 90 rpm to 110 rpm, at an ambient temperature.

The fertilizer can have a compositional make-up that is substantially homogeneous. In some instances, a compositional make-up for a 1 mm × 1 mm × 1 mm cube at any position of the mixture can be similar (within ± 20 %, or ± 10 %, or ± 5 %, or ± 3 %, ± 2 %, or ± 1 %, or ± 0.5 %) to that of a 1 mm × 1 mm × 1 mm cube at any other position of the mixture. In some instances, the $CaCO_3$ encapsulates, coats, or is coated by another fertilizer, such ammonium sulfate (($NH_4$)$_2SO_4$) and/or potassium sulfate ($K_2SO_4$). As a non-limiting example, $CaCO_3$ may encapsulate ($NH_4$)$_2SO_4$ and/or $K_2SO_4$. In some instances, the fertilizer further contains hydrochloric acid (HCl), carbonic acid ($H_2CO_3$), phosphoric acid ($H_3PO_4$), and/or nitric acid ($HNO_3$).

In some aspects, the product of the reactions and/or the starting materials of the reactions can be adjusted to fit the needs of a consumer, a plant, a soil, a water, or a combination thereof. As a non-limiting example, a nitrogen, phosphorus, potassium, sulfur fertilizer (NPK+S) grade can be 15:0:16+22. However, the ratio of $CaSO_4$ to KOH can be reduced from 10/1 to 15/1 which will reduce concentration of S from 22 % to 13.5%, and potassium from 13.5 to 9%.

In some aspects, additional fertilizer substances can be included or excluded in the fertilizer. If included, additional fertilizers can be chosen based on the particular needs of certain types of soil, climate, or other growing conditions to maximize the efficacy of the fertilizer in enhancing plant growth and crop yield. Additional additives may also be included or excluded in the fertilizer. Non-limiting examples of additives that can be included or excluded from the fertilizer of the present invention include additional nitrogen nutrients, phosphorus nutrients, potassium nutrients, additional micronutrients, and/or additional secondary nutrients. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and potassium nitrate. In some aspects, the additional secondary nutrients may include lime and/or superphosphate. In some instances, the additional fertilizer substances and/or the additional additives are contained in an optional coating at least partially covering the fertilizer.

In some instances, the inhibitors include nitrification inhibitors and/or urease inhibitors. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, a binder includes a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, poly e-caprolactone, poly L-lactide, poly butylene succinate, and biodegradable starch based polymers. The binder can include plaster of Paris, flour, starch, gluten, kaolin, bentonite, colloidal silica, or combinations thereof. Suitable flours include, but are not limited to, rice flour, wheat flour, and bleached wheat flour. Suitable starches include, but are not limited to, dextrin modified starches.

In some instances, the pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The fertilizer described herein can be comprised in a composition useful for application to soil. In some aspects, in addition to the fertilizer described herein, the composition may include other fertilizer compounds, micronutrients, primary nutrients, urea, additional nitrogen nutrients, insecticides, herbicides, or fungicides, or combinations thereof. The fertilizer described herein can also be included in a blended composition comprising other fertilizers. The other fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A fertilizer, formed into a fertilizer granule, can have desirable physical properties such as desired levels of abrasion resistance, granule strength, pelletizability, hygroscopicity, granule shape, and size distribution. In some aspects, The fertilizer granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the fertilizer granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the fertilizer can dissolve in 1 ml of water at a pH 7, under stirring at a rate 90 to 110 rpm, and at an ambient temperature, within 5 minutes of adding 100 mg of the fertilizer to the water. In some aspects, the fertilizer is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved fertilizer granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{weight\ of\ sample\ remained\ on\ 2\ mm\ sieve\ ((W2))}{intial\ weight\ of\ the\ sample\ (W1)} \times 100$$

## II. Method of Capturing Carbon Dioxide and Using Calcium Sulfate

Production of phosphoric acid in industry is realized in some instances by the reaction of calcium phosphate with sulfuric acid, which also produces calcium sulfate in the form of phosphogypsum. More calcium sulfate is produced by weight than the phosphoric acid. Production of phosphogypsum from calcium phosphate and sulfuric acid is described with the following stoichiometric equation:

$$Ca_3(PO_4)_2 + 3\ H_2SO_4 \rightarrow 2\ H_3PO_4 + 3\ CaSO_4$$

Certain aspects herein utilize calcium sulfate, such as phosphogypsum, for production of calcium carbonate ($CaCO_3$), ammonium sulfate (($NH_4)_2SO_4$), potassium sulfate ($K_2SO_4$), and/or the generation of an acid, such as sulfuric acid ($H_2SO_4$), that can be used in production of phosphoric acid ($H_2PO_4$). In some instances, $CaCO_3$ can be used as a fertilizer or fertilizer component for acid soils. In certain embodiments, $CO_2$ is utilized for production of the calcium carbonate. Therefore certain aspects allows for utilization of both calcium sulfate and $CO_2$ with the simultaneous production $CaCO_3$, ($NH_4)_2SO_4$), $K_2SO_4$, $H_2SO_4$, and/or $H_2PO_4$.

The reaction of $CaSO_4$ and $CO_2$, in some embodiments, comprises one step, the reaction of gypsum with the $CO_2$ + a source of ammonia + a source of potassium, such as the non-limiting example reaction (1)

(1)    $2CaSO_4.2H_2O + 2CO_2 + 2NH_3 + 2KOH \rightarrow 2CaCO_3 + (NH_4)_2SO_4 + K_2SO_4 + 2H_2O$

In some instances, the reaction of calcium sulfate ($CaSO_4$), carbon dioxide ($CO_2$), a source of ammonia, and a source of potassium comprise two, three, or more reactions that occur in the same reaction vessel or separate vessels. As a non-limiting example, the reaction of calcium sulfate ($CaSO_4$), carbon dioxide ($CO_2$), a source of ammonia, and a source of potassium are three reactions, such as the non-limiting example reactions (3), (4), and (5).

(3)    $CaSO_4.2H_2O + CO_2 + 2NH_3 \rightarrow CaCO_3 + (NH_4)_2SO_4 + H_2O$

(4)    $CaSO_4 + 2KOH \rightarrow Ca(OH)_2 + K_2SO_4$

(5)    $Ca(OH)_2 + CO_2 \rightarrow CaCO_3 + H_2O$

The reaction product, ($NH_4)_2SO_4$ may then, in another step, step (2), include catalytic decomposition of ($NH_4)_2SO_4$ in the presence of a catalyst.

(2)    $(NH_4)_2SO_4 \rightarrow 2\ NH_3 + H_2SO_4$

The catalyst in some instances can be an acid. The acid catalyst in some instances can be sulfuric acid. The reactions (1) and/or (2) can occur at ambient temperature or any temperature at, between, above, below, or range of -20, -19, -18, -17, -16, -15, -14, -13, -12, -11, -10, -9, -8, - 7, -6, -5, -4, -3, -2, -1, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, or 150°C. In some instances reaction (1) occurs at approximately 50°C to 70°C. The reactions (1) and/or (2) can be reacted in a continuous reaction or as a batch. The reactions (1) and/or (2) can be reacted for at, between, above, below, or range of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 minutes, and/or 1, 2, 3, 4, 5, 6, 7, 8, 9, 10, 11, 12, 13, 14, 15, 16, 17, 18, 19, 20, 21, 22, 23 hours, and/or 1, 2, 3, 4, 5, 6, 7, 8, 9, 10, 11, 12, 13, 14 days. The feeds, reactants, products, etc. can be transported or moved into, out of, and/or through the system at a rate of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, or 1000 g/minute, kg/minute, tons/minute. The feeds, reactants, products, etc. can be provided, obtained, and/or transported at a pressure of 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, and/or 50 bar.

In a further step, the sulfuric acid can be recycled for phosphoric acid production.

$$Ca_3(PO_4)_2 + 3\ H_2SO_4 \rightarrow 3\ CaSO_4 + 2\ H_3PO_4$$

The source of ammonia, can in some instances be one or more of a solution of ammonium hydroxide, ammonium, ammonium carbonate, ammonia gas, succinimide, and/or phthalimide. The source of potassium, can in some instances be one or more of potassium hydroxide (KOH), potassium chloride (KCl), potassium carbonate ($K_2CO_3$), potassium phosphate ($K_3PO_4$), and/or potassium nitrate ($KNO_3$). The products of the reaction of calcium sulfate ($CaSO_4$), carbon dioxide ($CO_2$), a source of ammonia, and a source of potassium can in some instances also produce water, hydrochloric acid (HCl), carbonic acid ($H_2CO_3$), phosphoric acid ($H_3PO_4$), and/or nitric acid ($HNO_3$).

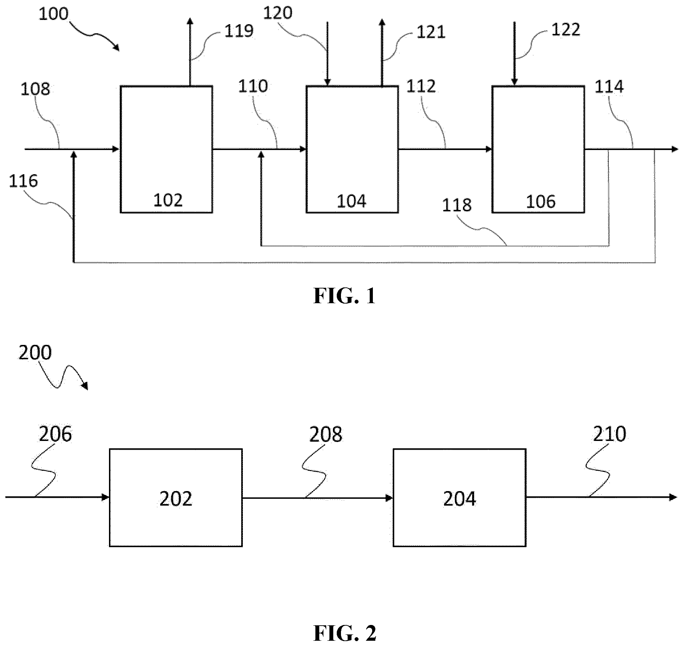

Referring to FIG. 1, the disclosed embodiment scheme demonstrations simultaneous utilization of $CO_2$ and $CaSO_4$ producing useful products such as $H_2SO_4$, $CaCO_3$, $NH_3$, $K_2SO_4$, and $H_3PO_4$. Recycling of sulfuric acid back to phosphoric acid production eliminates or reduces consumption of other $H_2SO_4$ resources. In some instances, calcium carbonate can be removed during the process, and can be used as a starting material for other products, including a fertilizer, and/or blended with other compositions, including those to generate a fertilizer. The system 100 can include a first reactor 102, a second reactor 104, and a third reactor 106. The feed mixture ingredients 108, which can include calcium phosphate and sulfuric acid, can be added separately or in combination to the first reactor 102. All or a portion of feed mixture 108 can be reacted in the first reactor 102 to generate a reaction product, which can comprise calcium sulfate and/or phosphoric acid. The phosphoric acid 119 can be separated in some instances from the calcium sulfate. In some instances the separation occurs in a separator (not shown). Mixture 110 can comprise the reaction product and/or the calcium sulfate that has at least partially been purified by removal of at least some of the phosphoric acid. Reactant stream 120 can comprise carbon dioxide, a source of ammonia, and a source of potassium and can be delivered to the second reactor 104 with all or a portion of the mixture 110. All or a portion of mixture 110 can be reacted in the second reactor 104 to generate a second reaction product, which can comprise calcium carbonate, ammonium sulfate, and potassium sulfate. The calcium carbonate 121 can be separated in some instances from the ammonium sulfate and potassium sulfate. In some instances, the ammonium sulfate is separated from the calcium carbonate and the potassium sulfate. In some instances, the potassium sulfate is separated from the calcium carbonate and the ammonium sulfate. In some instances, the calcium carbonate, ammonium sulfate, and potassium sulfate are not separate. In some instances the separation occurs in a separator, such as a second separator (not shown). Mixture 112 can comprise the second reaction product or ammonium sulfate that has been at least partially purified by removing at least a portion of the calcium carbonate and/or potassium sulfate. Catalyst stream 122 can comprise a catalyst, such as an acid, which may be sulfuric acid that can optionally be delivered with all or a portion of mixture 112 to the third reactor 106. All or a portion of mixture 112 can be catalytically decomposed in the third reactor 106 to generate a sulfuric acid composition 116 and an ammonia composition 118 or a mixture 114 of both. All or a portion of the sulfuric acid composition 116 can be combined with the feed mixture 108. All or a portion of the ammonia composition 118 can be combined with mixture 110. All or a portion of the mixture 114 can be removed from the system. All or a portion of the sulfuric acid composition 116 can be removed from the system (not shown). All or a portion of the ammonia composition 118 can be removed from the system (not shown).

Referring to FIG. 2, a schematic of a system and method for capturing carbon dioxide and utilizing calcium sulfate according to one example of the present invention is described. The system 200 can include a first reactor 202 and a second reactor 204. A feed mixture 206 comprising any of the starting materials disclosed herein, separately or together, can be fed into the first reactor 202. The first reactor 202 can be capable of having conditions suitable for the reactions described herein in order to generate one or more reaction product(s) 208. All or a portion of the reaction product 208 can be transferred to the second reactor 204, separated (not shown), and/or removed from the system (not shown). The second reactor can be capable of having conditions suitable for the reactions described herein in order to generate a reaction product 210. In some instances, the second reactor receives additional or different reactant products from that found in 206 that are suitable for the reactions described herein (not shown). All or a portion of the reaction product 210 can be transferred to the first reactor 202 (not shown), transferred to the second reactor 204 (not shown), separated (not shown), and/or removed from the system. The feed mixture 206 can in some instances comprise calcium sulfate, carbon dioxide, a source of ammonia, and/or a source of potassium, calcium phosphate, and/or sulfuric acid. The reaction product 208 can comprise calcium sulfate, carbon dioxide, a source of ammonia, a source of potassium, phosphoric acid, calcium carbonate, ammonium sulfate, hydrochloric acid, carbonic acid, phosphoric acid, and/or nitric acid. The reaction product 210 can comprise calcium sulfate, carbon dioxide, a source of ammonia, calcium carbonate, ammonium sulfate, phosphoric acid, sulfuric acid, hydrochloric acid, carbonic acid, and/or nitric acid.

In some instances, the disclosed embodiment scheme does not include the production of sulfuric acid by the degradation of ammonium sulfate. In some instances, the disclosed embodiment scheme does not include the production of phosphoric acid by reacting sulfuric acid and calcium phosphate. In some instances, the disclosed embodiment scheme does not include production of phosphogypsum or gypsum.

**III. Methods of Using the Fertilizer**

The fertilizer, including fertilizer granules, compositions containing the fertilizer, and fertilizer blends containing the fertilizer of the present disclosure can be used in methods of increasing the amount of one or more plant nutrients in soil and of enhancing plant growth. Such methods can include applying to the soil an effective amount of a composition and/or blend containing the fertilizer of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc. The composition(s) and/or fertilizer blends(s) containing the fertilizer can be applied to plants and/or soil as a top dressing fertilizer, basal fertilizer, and/or through any suitable method of application.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

The effectiveness of compositions comprising the fertilizer of the present invention can be ascertained by measuring the amount of calcium and optionally other nutrients in the soil at various times after applying the fertilizer composition to the soil. It is understood that different soils have different characteristics, which can affect the stability of the nutrients in the soil. The effectiveness of a fertilizer composition can also be directly compared to other fertilizer compositions by doing a side-by-side comparison in the same soil under the same conditions.

**Examples**

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

**Example 1**

100 g $CaSO_4.2H_2O$ and 10 g KOH can be loaded into a Parr reactor to react with $CO_2$ and $NH_3$ gases introduced with 25 cc/min flow at 5 bar through the Parr reactor. The reactor can be heated to 60°C inside of the reactor and a reaction can continue for 5 hours. The reactor can be cooled to room temperature. The reaction can form a product in suspension form. The suspension can be dried to form a product containing 58g $CaCO_3$, 76g $(NH_4)_2SO_4$, and 31.4 g $K_2SO_4$. In some instances, the suspension can be filtered to separate $CaCO_3$ and $(NH_4)_2SO_4$ and/or $K_2SO_4$. In some

instances, the $CaCO_3$ is separated to form a product containing $CaCO_3$ and a product containing $(NH_4)_2SO_4$, and $K_2SO_4$. The product containing $(NH_4)_2SO_4$, and $K_2SO_4$ can be formed as a fertilizer containing 14.9% nitrogen (N), 22.3% sulfur (S), and 13.5% potassium (K), and/or a NPK+S grade of 15:0:16+22.

Liquid containing the $(NH_4)_2SO_4$ filtrate can be dried at 120°C for 8 hours. Dry product containing $(NH_4)_2SO_4$ can be reacted in a U form quartz reactor with a decomposition catalyst of 5 g 60% sulfuric acid. The reactor can be heated to 45°C to decompose the ammonium sulfate. The produced ammonia can be ventilated from the reaction. After 1 hour, the reactor can be cooled and the remaining sulfuric acid catalyst and produced sulfuric acid can be collected.

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

**Claims**

1. A method of capturing $CO_2$ and using calcium sulfate ($CaSO_4$) to prepare a nitrogen (N), potassium (K), sulfur (S) fertilizer, the method comprising the steps of:

   (a) contacting calcium sulfate ($CaSO_4$) with carbon dioxide ($CO_2$), a source of potassium, and a source of ammonia, to generate a first product comprising calcium carbonate ($CaCO_3$), ammonium sulfate ($(NH_4)_2SO_4$), and potassium sulfate ($K_2SO_4$).

2. The method of claim 1, further comprising:

   (b) decomposing the $(NH_4)_2SO_4$ in the first product into $NH_3$ and sulfuric acid ($H_2SO_4$) by contacting the $(NH_4)_2SO_4$ with a catalyst, preferably the catalyst is an additional acid, preferably the additional acid is $H_2SO_4$; and/or
   (c) decomposing the $(NH_4)_2SO_4$ in the first product into $NH_3$ and sulfuric acid ($H_2SO_4$) by contacting the $(NH_4)_2SO_4$ with a catalyst and contacting the $H_2SO_4$ produced in step (b) with calcium phosphate ($Ca_3(PO_4)_2$) to generate phosphoric acid ($H_3PO_4$) and $CaSO_4$.

3. The method of any one of claims 1 and 2, wherein:

   the $CaSO_4$ is waste gypsum and/or recycled gypsum, preferably wherein the $CaSO_4$ is phosphogypsum and/or red gypsum;
   the source of ammonia is one or both of ammonia ($NH_3$) and ammonium hydroxide ($NH_4OH$);
   the source of $CO_2$ in step (a) comprises waste gas from an industrial plant and/or flue gas; and/or
   the source of potassium comprises potassium hydroxide (KOH), potassium chloride (KCl), potassium carbonate ($K_2CO_3$), potassium phosphate ($K_3PO_4$), and/or potassium nitrate ($KNO_3$).

4. The method of any one of claims 1 to 3, wherein the first product further comprises water, hydrochloric acid (HCl), carbonic acid ($H_2CO_3$), phosphoric acid ($H_3PO_4$), and/or nitric acid ($HNO_3$).

5. The method of any one of claims 1 to 4, wherein the step (a) occurs at approximately 50°C to 70°C.

6. The method of any one of claims 1 to 5, further comprising:

   separating $CaCO_3$ from the first product; and/or
   separating $CaCO_3$ from the first product and combining the separated $CaCO_3$ with a plant nutrient to form a fertilizer and/or drying the separated $CaCO_3$.

7. The method of any one of claims 2 to 6, wherein:

   at least a portion of the $NH_3$ produced in step (b) is used as at least a portion of the $NH_3$ used in step (a);

wherein at least a portion of the $H_2SO_4$ produced in step (b) is used as at least a portion of $H_2SO_4$ used to produce phosphogypsum; and/or

wherein at least a portion of the $H_2SO_4$ produced in step (b) is used as at least a portion of $H_2SO_4$ used to produce phosphogypsum and at least a portion of the phosphogypsum produced is used as the source for the $CaSO_4$ of step (a).

8.  A system for capturing $CO_2$ and using calcium sulfate ($CaSO_4$) to prepare a nitrogen (N), potassium (K), sulfur (S) fertilizer, the system comprising:

    (a) a first reactor capable of receiving $CaSO_4$, $CO_2$, a source of potassium, and one or both of ammonia ($NH_3$) and ammonium hydroxide ($NH_4OH$) and providing conditions to generate a product comprising calcium carbonate ($CaCO_3$), ammonium sulfate (($NH_4)_2SO_4$), and potassium sulfate ($K_2SO_4$).

9.  The system of claim 8, further comprising:

    (b) a second reactor capable of decomposing ($NH_4)_2SO_4$ generated from reactor (a) into $H_2SO_4$ and $NH_3$;
    (c) an apparatus capable of separating $CaCO_3$ from the product generated in the first reactor; and/or
    (d) a third reactor capable of receiving $H_2SO_4$ and calcium phosphate ($Ca_3(PO_4)_2$) and providing conditions to generate $CaSO_4$ and phosphoric acid ($H_3PO_4$).

10. The system of claim 9, wherein:

    the first reactor and the second reactor are the same reactor;
    the first reactor and the second reactor are different reactors;
    the third reactor and the second reactor are the same reactor;
    the third reactor, the second reactor, and the first reactor are the same reactor; and/or
    the third reactor, the second reactor, and the first reactor are different reactors.

11. The system of any one of claims 8 to 10, wherein:

    the first reactor is capable of receiving and reacting $CO_2$ from a flue gas and/or a waste gas from an industrial plant and/or
    the first reactor is capable of receiving and reacting $CO_2$ from a flue gas and/or a waste gas from an industrial plant, wherein the $CO_2$ from the flue gas and/or waste gas is not purified to separate or concentrate the $CO_2$ in the flue gas and/or waste gas before reacting to form the $CaCO_3$.

12. A fertilizer product comprising calcium carbonate ($CaCO_3$), ammonium sulfate (($NH_4)_2SO_4$), and potassium sulfate ($K_2SO_4$) produced by the method of any one of claims 1 to 7.

13. The fertilizer product of claim 12, further comprising one or more of water, hydrochloric acid (HCl), carbonic acid ($H_2CO_3$), phosphoric acid ($H_3PO_4$), and/or nitric acid ($HNO_3$), and/or wherein the $CaCO_3$ encapsulates at least a portion of the ($NH_4)_2SO_4$ and $K_2SO_4$.

14. A fertilizer composition comprising calcium carbonate ($CaCO_3$), ammonium sulfate (($NH_4)_2SO_4$), and potassium sulfate ($K_2SO_4$).

15. The fertilizer composition of claim 14, further comprising one or more of water, hydrochloric acid (HCl), carbonic acid ($H_2CO_3$), phosphoric acid ($H_3PO_4$), and/or nitric acid ($HNO_3$), and/or wherein the $CaCO_3$ encapsulates at least a portion of the ($NH_4)_2SO_4$ and $K_2SO_4$.

**FIG. 1**

**FIG. 2**

Europäisches
Patentamt

European
Patent Office

Office européen
des brevets

# EUROPEAN SEARCH REPORT

Application Number

EP 22 18 2215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 315 976 B1 (PHINNEY ROBIN [CA]) 13 November 2001 (2001-11-13) | 1,3-6, 8-15 | INV. C05C3/00 |
| Y | * col.4 1.18-33; figure 2 * | 2,7 | C05D1/02 C05D3/02 C05G1/00 |
| Y | US 2004/234441 A1 (HANSEN TORD OEYSTEIN [NO]) 25 November 2004 (2004-11-25) * paragraphs [0002], [0004], [0010] * | 2,7 | C01C1/24 C01C1/28 C01D5/00 C01B17/74 |
| Y | EP 0 083 831 A1 (FERTILIZER DEV SA [CH]) 20 July 1983 (1983-07-20) * page 5 1.8-28; examples 1-3 * | 2,7 | |
| X | US 2021/269321 A1 (PAPOUCHADO LUCIEN M [US] ET AL) 2 September 2021 (2021-09-02) | 8-11 | |
| A | * paragraphs [0009], [0088] - [0094], [0113] - [0118], [0205]; figures 2,61 * | 1-7, 12-15 | |
| X | US 8 721 999 B2 (GHOSH PUSHPITO KUMAR [IN]; MODY HARESH MAHIPATLAL [IN] ET AL.) 13 May 2014 (2014-05-13) | 8-11 | TECHNICAL FIELDS SEARCHED (IPC) |
| A | * col.3 1.10-19; figure 1 * | 1-7, 12-15 | C05C C05D C05G |
| X | US 2009/056707 A1 (FOODY BRIAN E [CA] ET AL) 5 March 2009 (2009-03-05) * paragraphs [0135], [0186] - [0191]; figures 1-4a * | 1,3-6, 8-15 | C01C C01F C01D C01G C01B |

The present search report has been drawn up for all claims

| Place of search | Date of completion of the search | Examiner |
|---|---|---|
| The Hague | 5 December 2022 | Goodman, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## EP 4 299 553 A1

### ANNEX TO THE EUROPEAN SEARCH REPORT
### ON EUROPEAN PATENT APPLICATION NO.

EP 22 18 2215

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2022

| Patent document cited in search report | | Publication date | Patent family member(s) | | Publication date |
|---|---|---|---|---|---|
| US 6315976 | B1 | 13-11-2001 | AU | 4254599 A | 05-01-2000 |
| | | | BG | 63775 B1 | 29-12-2002 |
| | | | BR | 9910403 A | 09-01-2001 |
| | | | CN | 1299337 A | 13-06-2001 |
| | | | EA | 200001194 A1 | 25-06-2001 |
| | | | EP | 1094985 A1 | 02-05-2001 |
| | | | HR | P990360 A2 | 30-04-2000 |
| | | | HU | 0101399 A2 | 28-12-2001 |
| | | | ID | 28245 A | 10-05-2001 |
| | | | JP | 2002518281 A | 25-06-2002 |
| | | | KR | 20010034850 A | 25-04-2001 |
| | | | MX | PA00010125 A | 14-10-2004 |
| | | | PL | 344486 A1 | 05-11-2001 |
| | | | SI | 20525 A | 31-10-2001 |
| | | | SK | 15452000 A3 | 09-04-2001 |
| | | | TR | 200003226 T2 | 21-03-2001 |
| | | | US | 6315976 B1 | 13-11-2001 |
| | | | WO | 9965823 A1 | 23-12-1999 |
| | | | YU | 76200 A | 28-02-2003 |
| US 2004234441 | A1 | 25-11-2004 | AT | 372300 T | 15-09-2007 |
| | | | CA | 2461683 A1 | 03-04-2003 |
| | | | DE | 60222292 T2 | 19-06-2008 |
| | | | EP | 1444166 A1 | 11-08-2004 |
| | | | NO | 315600 B1 | 29-09-2003 |
| | | | US | 2004234441 A1 | 25-11-2004 |
| | | | WO | 03027018 A1 | 03-04-2003 |
| EP 0083831 | A1 | 20-07-1983 | AT | 14414 T | 15-08-1985 |
| | | | EP | 0083831 A1 | 20-07-1983 |
| | | | IL | 64712 A | 31-07-1984 |
| | | | ZA | 828301 B | 28-12-1983 |
| US 2021269321 | A1 | 02-09-2021 | NONE | | |
| US 8721999 | B2 | 13-05-2014 | AU | 2010228846 A1 | 20-10-2011 |
| | | | BR | PI1009805 A2 | 22-11-2016 |
| | | | CA | 2756763 A1 | 30-09-2010 |
| | | | CN | 102421707 A | 18-04-2012 |
| | | | EP | 2411330 A1 | 01-02-2012 |
| | | | ES | 2435008 T3 | 18-12-2013 |
| | | | IL | 215391 A | 29-01-2015 |
| | | | JP | 5509310 B2 | 04-06-2014 |
| | | | JP | 2012521945 A | 20-09-2012 |
| | | | US | 2013315805 A1 | 28-11-2013 |
| | | | WO | 2010109492 A1 | 30-09-2010 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 22 18 2215

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2022

| Patent document cited in search report | Publication date | Patent family member(s) | | Publication date |
|---|---|---|---|---|
| US 2009056707 A1 | 05-03-2009 | AU | 2008291589 A1 | 05-03-2009 |
| | | BR | PI0816467 A2 | 24-03-2015 |
| | | CA | 2697087 A1 | 05-03-2009 |
| | | CN | 101835727 A | 15-09-2010 |
| | | EP | 2197814 A1 | 23-06-2010 |
| | | US | 2009056707 A1 | 05-03-2009 |
| | | WO | 2009026707 A1 | 05-03-2009 |

EPO FORM P0459

For more details about this annex : see Official Journal of the European Patent Office, No. 12/82

page 2 of 2